# EUROPÄISCHE PATENTSCHRIFT

(11) **EP 0 555 445 B1**
(45) Veröffentlichungstag und Bekanntmachung des Hinweises auf die Patenterteilung: **27.12.1995**
(21) Anmeldenummer: 92918228.5
(22) Anmeldetag: 10.06.1992
(51) Int. Cl.: F26B 7/00

(54) **VERFAHREN ZUR ENTFERNUNG VERDAMPFUNGSFÄHIGER STOFFE UND ANLAGE ZUR DURCHFÜHRUNG DES VERFAHRENS**
PROCESS FOR REMOVING EVAPORABLE SUBSTANCES AND INSTALLATION FOR IMPLEMENTING THE PROCESS
PROCEDE ET SYSTEME D'ELIMINATION DE SUBSTANCES EVAPORABLES

(30) Priorität: 11.06.1991 DE 4119149
(43) Veröffentlichungstag der Anmeldung: 18.08.1993
(73) Patentinhaber: HAK-ANLAGENBAU GMBH FÜR VERFAHRENSTECHNIK, STRAHLUNGSTECHNIK UND TROCKNUNGSTECHNIK, D-22119 Hamburg (DE)
(72) Erfinder: Krause, Heinz A., D-22119 Hamburg (DE)
(86) Internationale Anmeldenummer: EP9201300
(87) Internationale Veröffentlichungsnummer: WO9222365

(56) Entgegenhaltungen:
- EP-A- 0 113 900
- EP-A- 0 252 155
- WO-A-82/01062
- WO-A-82/02761
- WO-A-89/12207
- DE-A- 3 734 281
- DE-A- 4 036 112
- US-A- 4 640 020
- US-A- 4 746 968
- US-A- 5 003 143
- US-A- 5 020 237
- US-A- 5 037 560
- K. Kröll, "Trockner und Trocknungsverfahren", Springer Verlag, 1978, Seiten 401-405

## Beschreibung

Die Erfindung betrifft ein Verfahren zur Entfernung verdampfungsfähiger Stoffe aus einem kontaminiertem festen oder schüttfähigen Stoff, bei dem der zu behandelnde Stoff dosiert in eine Unterdruck aufweisende Desorptionskammer eingebracht, in dieser von einem Spülgas umströmt und/oder durchströmt und zur Einbringung von Verdampfungsenergie mit elektromagnetischen Wellen bestrahlt wird und die durch Verdampfung aus dem zu behandelnden Stoff herausgelösten verdampfungsfähigen Stoffe vom Gasstrom aufgenommen und mit diesem aus der Desorptionskammer abgeführt werden und eine Anlage zur Durchführung des Verfahrens.

Nach der DE-A-3907248 ist es bekannt, Schüttgut, insbesondere Asphaltgranulat, in einem Muldentrockner umzuwälzen und mittels Mikrowellen so schonend zu erhitzen, daß z.B. im Asphaltgranulat befindliches Bitumen nicht beschädigt wird und auch gesundheitsschädliche Emissionen vermindert werden. Von Nachteil ist die relativ aufwendige bauliche Gestaltung des Muldentrockners.

Es ist auch bekannt, feinteilige Feststoffe durch Einwirkung von Infrarotstrahlen zu trocknen. Entsprechende Vorrichtungen werden z.B. in der DE-C-1085751 und DE-C-3826047 beschrieben. Zur Verminderung der Feuchte in dispersen Gütern oder feuchtehaltigem Stückgut ist es nach der DE-A-3738992 ferner bekannt, daß Stück- und/oder Schüttgut in einem vakuumdichten abgeschlossenen Behälter bei vermindertem Systemdruck elektromagnetischer Strahlung von Frequenzen aus dem Bereich von 50 bis 7,5 x 10¹ Hz auszusetzen. Der hierbei entstehende Dampf wird an den in unmittelbarer Nähe zum Gut gelegenen gekühlten Flächen innerhalb des Vakuumbehälters kondensiert und als Kondensat abgeführt. Dieses Verfahren eignet sich nicht zur Behandlung verunreinigter Stoffe, da wegen der Nähe der Kondensation des Dampfes zum Gut Verunreinigungen wieder in das Gut zurückgelangen können.

Zur Rekonditionierung von Aktivkohle ist es bekannt, mittels Heißdampf die Aktivkohle aufzuheizen, um damit einen großen Teil der an den äußeren und inneren Oberflächen der Aktivkohlepartikelchen gebundenen Gase oder Flüssigkeiten aus der Aktivkohle austreiben zu können. Das Desorptiv wird vom Heizdampfstrom aufgenommen und zum Kondensator geleitet. Im Kondensator entsteht naturgemäß eine Mischung aus Wasserdampf und Lösemittelkonzentrat. Mit der Trennung des Wassers vom Desorptiv beginnen häufig erneute Probleme, die in vielen Fällen sehr komplizierte Aufbereitungsverfahren nötig machen. Zur Dekontamination von Erdreich ist es ferner bekannt, mittels Gas- oder Ölbrennern das zu entgiftende Erdreich zu erhitzen und die dabei entstehenden Dämpfe direkt oder in einer gesonderten Brennkammer zu verbrennen. Der hierbei notwendige Energieeintrag ist umso größer, je feinkörniger der zu entgiftende Boden ist, da sich die bei dem Trocknungsvorgang gebildeten Verkrustierungen auf die Oberflächen der Lehm- oder Tonschichten auswirken, die damit feuchte- und wärmeundurchlässiger werden. Darüber hinaus ist die bei dieser bekannten Verbrennung entstehende Gefährdung der Umwelt durch giftige Emissionen nicht mit Sicherheit auszuschließen.

In der WO-82/01062 wird ferner ein Verfahren zur Materialtrocknung und eine Vorrichtung zu dessen Durchführung beschrieben. Das feuchte Material wird in einer Vorerhitzerzone mit Luft vorgetrocknet und dann einer Haupttrocknungskammer zugeführt, in der ein Unterdruck ausgebildet ist und das zu trocknende Material mit Mikrowellen beaufschlagt. Schwebstoffhaltige Luft in der Haupttrocknungskammer wird aus dieser mittels einer Vakuumpumpe abgeführt und aufbereitet. Die Vakuumpumpe stellt gleichzeitig den in der Haupttrocknungskammer gewünschten Unterdruck her. Hierdurch soll bei der Trocknung von feuchtem Getreide auch dessen Selbstentzündung verhindert werden.

Die Aufgabe der Erfindung besteht darin, das Verfahren der eingangs genannten Art so zu verbessern sowie eine Anlage zur Durchführung eines Verfahrens aufzuzeigen, durch das kontaminierte feste und schüttfähige Stoffe auf einfache Weise so aufbereitet werden können, daß verdampfungsfähige Verunreinigungen aus dem Stoff entfernt werden und der gereinigte Stoff wieder seinem bestimmungsgemäßen Einsatzzweck zugeführt werden kann.

Erfindungsgemäß erfolgt die Lösung der Aufgabe bzgl. des Verfahrens durch die kennzeichnenden Merkmale des Anspruchs 1 und bzgl. der Anlage durch die kennzeichnenden Merkmale des Anspruchs 26.

Nach der Erfindung erfolgt durch Einsatz elektromagnetischer Strahlung und der Verwendung eines optimalen Transportgases die Rekonditionierung des jeweils zu behandelnden Stoffes und die anschließende Rückgewinnung des jeweiligen Grundstoffes in einer optimalen Gasatmosphäre, wobei unerwünschte Veränderungen des zu reinigenden Stoffes ausgeschlossen werden können. Zur Steigerung der Trocknungsgeschwindigkeit wird die elektromagnetische Trocknung mit der Konvektionstrocknung kombiniert, in dem der Gasstrom mit hoher Strömungsgeschwindigkeit an den Partikeln des zu reinigenden Stoffes vorbeigeführt wird. Die sich unter der Einwirkung von elektromagnetischer Energie bildende Dampfschicht wird auf der äußeren Schicht des zu reinigenden Stoffes fortgerissen, wodurch der Rekonditionierungsprozeß deutlich beschleunigt wird. Die Kombination der unterschiedlichen Energieformen unterstützt die für eine Desorption notwendige Verringerung der Bindungskräfte, die in der Hauptsache van der Waal'schen Kräfte sind und erhöht gleichzeitig den Partialdruck der Verunreinigungen innerhalb des zu reinigenden Stoffes, so daß die Verunreinigungen aus diesem herausgelöst werden können. Zur Steigerung der Trocknungsgeschwindigkeit wird die elektromagnetische Trocknung durch die gezielte Auswahl und Kombination unterschiedlicher elektromagnetischer Strahlungsarten optimiert. Die sich unter der Einwirkung von elektromagnetischer Energie bildende Dampfschicht auf der äußeren und ggf. inneren Stoffoberfläche wird kontinuierlich abgesaugt und damit der Rekonditionierungsprozeß deutlich beschleunigt. Die Kombination der unterschiedlichen Energieformen unterstützt den für eine Reinigung des Stoffes notwendigen Energieeintrag, insbesondere auch in die inneren Schichten des zu entgiftenden Stoffes. Durch die gezielte Auswahl der geeigneten Wellenlänge kann sicher ausgeschlossen werden, daß durch den Desorptionseintrag eine Verkrustung der Oberfläche eintritt und damit der Desorptionsvorgang behindert wird. Gleichzeitig wird erreicht, daß die einzustrahlende Energie nicht die gesamte Stoffmasse bis zum Siedepunkt aufheizen muß, um den Verdampfungsvorgang durchführen zu können. Hierdurch wird der Energieeintrag auf den erforderlichen Eintrag der Verdampfungswärme für die zu desorbierenden Stoffe beschränkt. Auf diese Weise kann die Entfernung ökologisch unerwünschter Bestandteile aus zu reinigenden Stoffen sowohl ökologisch als auch wirtschaftlich durchgeführt werden. Besonders vorteilhaft ist der Einsatz des Verfahrens zur Rekonditionierung von Aktivkohle und zur Dekontamination von kontaminiertem Erdreich.

Wellenlänge und Frequenz der elektromagnetischen Strahlung werden an die Charakteristika des zu reinigenden Stoffes angepaßt. In besonderen Fällen ist es auch möglich, den zu reinigenden Stoff mit elektromagnetischer Strahlung unterschiedlicher Frequenz und Wellenlänge zu bestrahlen. Vorteilhafte Ausgestaltungen des erfindungsgemäßen Verfahrens sind ebenso wie die Ausgestaltungen der erfindungsgemäßen Anlage in den abhängigen Ansprüchen beschrieben.

Die Erfindung wird nachstehend anhand der in den Zeichnungen schematisch dargestellten Anlagen näher erläutert. Es zeigt
- Fig. 1: ein Prozeßschema für einen geschlossenen Rekontaminierungsprozeß zur Behandlung von Aktivkohle,
- Fig. 2: ein Prozeßschema für einen geschlossenen Rekontaminierungsprozeß zur Behandlung von Erdreich.

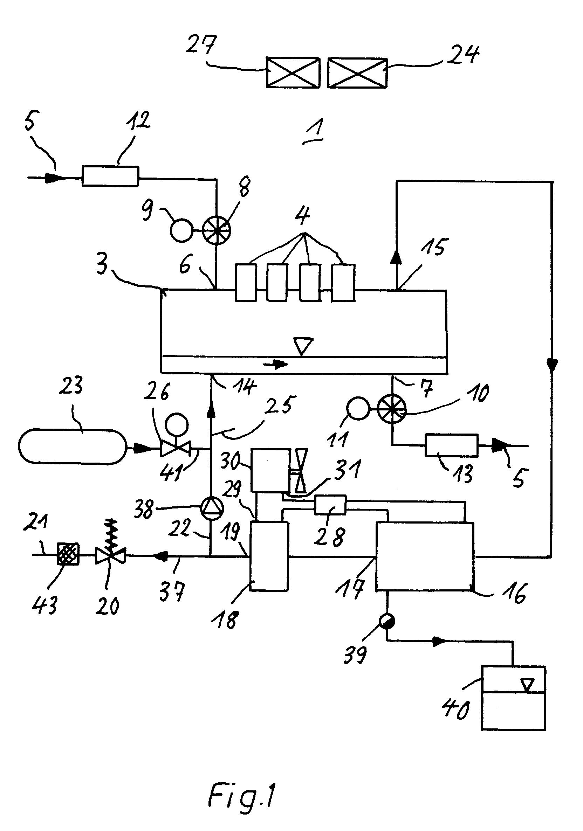

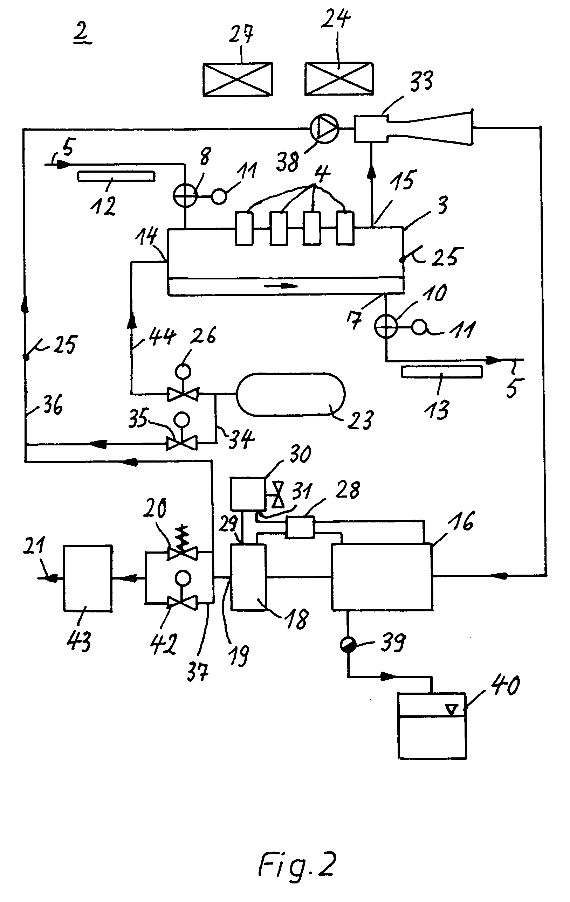

Wesentliches Bauelement der Anlagen 1 und 2 nach den Figuren 1 und 2 ist eine Desorptionskammer 3, die vorzugsweise im Unterdruck gegenüber der umgebenden Atmosphäre betrieben wird. In diese Desorptionskammer 3 wird der zu reinigende Stoff 5 eingeführt und abhängig von den Charistika des Stoffes 5 einer elektromagnetischen Strahlung ausgesetzt und gleichzeitig von einem Spülgas durchströmt bzw. umströmt.

Wie in Fig. 1 dargestellt, besteht die Anlage 1 aus der Desorptionskammer 3 mit einer Strahleranordnung 4, die einen Einlaß für den Stoffeingang 6 und einen Auslaß für den Stoffausgang 7 aufweist. Der jeweils zu reinigende Stoff 5 wird zunächst auf eine Waage 12 aufgeben und von dieser über eine Stoffeintragschleuse 8 in die Desorptionskammer 3 eingeführt. Der aus dieser austretende Stoff 5 wird über einen Stoffausgang 7 mittels einer Stoffaustragsschleuse 10 aus der Desorptionskammer 3 abgeführt. Die Desorptionskammer 3 weist eine Spülgaseinlaß 14 auf, durch den ein Gasstrom in die Desorptionskammer 3 eingeführt wird und den zu reinigenden Stoff umströmt und/oder durchströmt und nach Sättigung den verdampfungsfähigen Verunreinigungen durch den Spülgasauslaß 15 wieder austritt. Die wärmetechnische Behandlung des Stoffes 5 in der Desorptionskammer 3 mit elektromagnetischer Strahlungsenergie erfolgt in Abhängigkeit von den Eigenschaften des jeweiligen Stoffes 5. Es können Hochfrequenzstrahlungsenergie, Niederfrequenzenergie, Infrarotstrahlung, Mikrowellenstrahlung und dergleichen in verschiedenen Frequenz- und Wellenlängenbereichen zum Einsatz kommen.

Das auch dem Spülgasauslaß 15 austretende Gas wird einem Kondensator 16 zugeführt, in dem die Verunreinigungen abgekühlt und kondensiert sowie über einen Kondensatableiter 39 abgeführt werden. Das abgeleitete Kondensat gelangt in einen Kondensatbehälter 40, aus dem das Kondensat mit den aufgenommenen Verunreinigungen des Stoffes 5 einer weiteren Bearbeitung zugeführt werden kann.

Das aus dem Kondensator 16 austretende Gas wird einem Wärmetauscher 8 zugeführt, der mit der Abwärme einer Kältemaschine 28 beaufschlagt wird. In dem Wärmetauscher 18 wird das durchströmende Gas auf eine Temperatur rükkerwärmt, mittels der eine erneute Einführung des Gases über den Spülgaseinlaß 14 in die Desorptionskammer 3 möglich ist. In dem Wärmetauscher 18 nicht ausgenutzte Restwärme der Kältemaschine 28 wird in einem weiteren Wärmetauscher 30 soweit zurückgekühlt, daß das aus dem Heizmittelausgang 31 austretende Heizmedium nach thermodynamischer Aufbereitung durch die Kältemaschine 28 wieder dem Kondensator 16 zugeführt werden kann.

Der Gasausgang 19 des Wärmetauschers 18 ist mit einer Anschlußleitung 22 verbunden, die mit dem Spülgaseinlaß 14 in Verbindung steht. Darüber hinaus ist an die Anschlußleitung 22 eine Gasauslaßleitung 37 angeschlossen, in der ein Sicherheitsventil 20 angeordnet ist und die in Richtung der umgebenen Atmosphäre auslaßseitig ein Filter 43 mit einem Gasauslaß 21 aufweist.

In der Anschlußleitung 22 ist ferner ein Gebläse 38 sowie eine Gasanalysesonde 25 angeordnet, die mit einem Gasanalyserechner 24 verbunden ist. In Abhängigkeit von dessen Ausgangswerten wird ein Stellventil 26 angesteuert, das in einer Leitung 41 angeordnet ist, die einen Gasvorratsbehälter 23 mit der Anschlußleitung 22 verbindet.

Ferner sind die Waagen 3, 13 sowie die Antriebsmotore 9, 11 der Stoffeintragsschleuse 8 und Stoffaustragsschleuse 10 mit einem Prozeßrechner 27 verbunden, der eine Optimierung des durch die Desorptionskammer 3 durchzuführenden Stoffes in Abhängigkeit von den in der Desorptionskammer 3 abgeschiedenen dampffähigen Verunreinigungen durchführt. Diese beschriebene Anlage 1 ist z.B. zur Rekonditionierung von verunreinigter Aktivkohle geeignet.

Fig. 2 zeigt eine weitere Anlage 2, die z.B. zur Dekontamination von verunreinigtem Erdreich eingesetzt werden kann. Diese Anlage 2 ist ähnlich wie die Anlage 1 konzipiert, weist jedoch geringe Abwandlungen auf. So ist beispielsweise der Spülgaseinlaß 14 der Desorptionskammer 3 direkt mit einem Gasvorratsbehälter 23 verbunden, von dem das Spülgas durch die Desorptionskammer 3 volumenabhängig geregelt durch das Ventil 26 geleitet wird. Der Gasvorratsbehälter 23 ist ferner mittels einer Anschlußleitung 34 mit einem Stellventil 35 mit einer Anschlußleitung 36 verbunden, die den Gasausgang des Wärmetauschers 18 mit einem Ejektor 33 verbindet. An den Ejektor 33 ist mittels einer weiteren Leitung der Spülgasauslaß 15 angeschlossen. Die Desorptionskammer 3 wird somit bei der Anlage 2 stets mit einem besonders aufbereiteten Gas aus dem Gasvorratsbehälter 23 beausschlagt. Lediglich zur Konditionierung des dem Ejektor 33 zuzuführenden Gases wird aus dem Gasvorratsbehälter 23 Spülgas in die Anschlußleitung 36 eingeschleust.

An den Gasausgang 19 des Wärmetauschers 18 ist eine Gasauslaßleitung 37 mit einem Ventil 42 angeschlossen, über die durch die Gasauslaßleitung 37 strömendes Gas über einen Filter 43 einem Gasauslaß 21 zugeführt wird. Parallel zu der Gasauslaßleitung 37 ist eine weitere Leitung mit einem Sicherheitsventil 20 angeordnet, durch das sichergestellt wird, daß bei einer Überschreitung des Druckes in der Gasleitungsanordnung eine Druckminderung durch Gasablaß über das Sicherheitsventil 20 und den Filter 43 erfolgt.

## Patentansprüche

1. Verfahren zur Entfernung verdampfungsfähiger Stoffe aus einem kontaminiertem festen oder schüttfähigen Stoff, bei dem der zu behandelnde Stoff dosiert in eine Unterdruck aufweisende Desorptionskammer eingebracht, in dieser von einem Spülgas umströmt und/oder durchströmt und zur Einbringung von Verdampfungsenergie mit elektromagnetischen Wellen bestrahlt wird, und die durch Verdampfung aus dem zu behandelnden Stoff herausgelösten verdampfungsfähigen Stoffe vom Gasstrom aufgenommen und mit diesem aus der Desorptionskammer abgeführt werden, dadurch gekennzeichnet, daß der mit Kontaminationen verunreinigte Stoff vor dem Einbringen in die Desorptionskammer gewogen und dann mit elektromagnetischen Wellen mit einer von dem zu rekonditionierenden Stoff abhängigen Frequenz im Bereich von 1Hz bis 4 x 10¹² GHz und abhängiger Wellenlänge oder durch eine Kombination unterschiedlicher Energieformen des angegebenen Bereiches bestrahlt wird, wobei der Eintrag der Strahlungsenergie in die Desorptionskammer manuell oder automatisch aus einem Soll/Ist-Vergleich in einem Prozeßrechner unter Berücksichtigung des spezifischen Gewichtes des gereinigten Stoffes und des Gewichtsunterschiedes des ungereinigten und gereinigten Stoffes optimiert wird, daß der gesättigte Gasstrom durch einen Kondensator geleitet wird, in dem die Verunreinigungen als Kondensat abgeschieden und dann aus dem Kondensator abgeleitet und als gereinigter Stoff durch eine Ausgangsschleuse aus der Desorptionskammer ausgebracht werden, und daß das aus dem Kondensator austretende Gas in einem Wärmetauscher erwärmt und wieder der Desorptionskammer zugeführt wird, wobei die Zusammensetzung des in die Desorptionskammer zurückzuführenden Gases analysiert und ggf. zusätzliches Gas beigemischt und eine der Menge des beigemischten Gases entsprechende Menge des aus dem Wärmetauscher heraustretenden Gases über ein Sicherheitsventil abgeleitet wird.

2. Verfahren nach Anspruch 1, dadurch gekennzeichnet, daß als elektromagnetische Strahlung kurzwellige Infrarotstrahlung mit einer Wellenlänge von 1 mm bis 1 nm eingesetzt wird.

3. Verfahren nach Anspruch 1, dadurch gekennzeichnet, daß als elektromagnetische Strahlung Mikrowellenstrahlung mit einer Frequenz von mehr als 1 MHz eingesetzt wird.

4. Verfahren nach Anspruch 1, dadurch gekennzeichnet, daß als elektromagnetische Strahlung UV-Strahlung mit einer Wellenlänge von 380 bis 100 nm eingesetzt wird.

5. Verfahren nach Anspruch 1, dadurch gekennzeichnet, daß als elektromagnetische Strahlung Niederfrequenzstrahlung mit einer Frequenz von 16 bis 20 kHz eingesetzt wird.

6. Verfahren nach Anspruch 1 und 3, dadurch gekennzeichnet, daß als elektromagnetische Strahlung Mikrowellenstrahlung mit einer Frequenz von mehr als 1 MHz und kurzwellige Infrarotstrahlung mit einer Wellenlänge von 1 mm - 780 nm gemeinsam eingesetzt wird.

7. Verfahren nach Anspruch 1, dadurch gekennzeichnet, daß als elektromagnetische Strahlung UV-Strahlung mit einer Wellenlänge von 380 - 100 nm und Mikrowellenstrahlung mit einer Frequenz von mehr als 1 MHz eingesetzt wird.

8. Verfahren nach Anspruch 1, dadurch gekennzeichnet, daß als elektromagnetische Strahlung UV-Strahlung mit einer Wellenlänge von 380 - 100 nm und kurzwellige Infrarotstrahlung mit einer Wellenlänge von 1 mm - 780 nm gemeinsam eingesetzt wird.

9. Verfahren nach Anspruch 1, dadurch gekennzeichnet, daß als elektromagnetische Strahlung Niederfrequenzstrahlung mit einer Frequenz von 16 - 20 kHz und kurzwellige Infrarotstrahlung mit einer Wellenlänge von 1 mm - 780 nm gemeinsam eingesetzt wird.

10. Verfahren nach Anspruch 1, dadurch gekennzeichnet, daß als elektromagnetische Strahlung Niederfrequenzstrahlung mit einer Frequenz von 16 - 20 kHz und UV-Strahlung mit einer Wellenlänge von 380 - 100 nm gemeinsam eingesetzt wird.

11. Verfahren nach Anspruch 1, dadurch gekennzeichnet, daß als elektromagnetische Strahlung Niederfrequenz-Strahlung mit einer Frequenz von 16 - 20 kHz und Mikrowellenstrahlung mit einer Frequenz von mehr als 1 MHz gemeinsam eingesetzt wird.

12. Verfahren nach Anspruch 1, dadurch gekennzeichnet, daß als elektromagnetische Strahlung Niederfrequenz-Strahlung mit einer Frequenz von 16 - 20 kHz, Infrarotstrahlung mit einer Wellenlänge von 1 mm - 780 nm und Mikrowellenstrahlung mit einer Frequenz von mehr als 1 MHz gemeinsam eingesetzt wird.

13. Verfahren nach Anspruch 1, dadurch gekennzeichnet, daß als elektromagnetische Strahlung Niederfrequenz-Strahlung mit einer Frequenz von 16 - 20 kHz, Infrarotstrahlung mit einer Wellenlänge von 1 mm bis 780 nm und UV-Strahlung mit einer Wellenlänge von 380 - 100 nm gemeinsam eingesetzt wird.

14. Verfahren nach Anspruch 1, dadurch gekennzeichnet, daß als elektromagnetische Strahlung Infrarotstrahlung mit einer Wellenlänge von 1 mm bis 780 nm, UV-Strahlung mit einer Wellenlänge von 380 - 100 nm und Mikrowellenstrahlung mit einer Frequenz von mehr als 1 MHz gemeinsam eingesetzt wird.

15. Verfahren nach Anspruch 1, dadurch gekennzeichnet, daß als elektromagnetische Strahlung Niederfrequenz-Strahlung mit einer Frequenz von 16 - 20 kHz, Infrarotstrahlung mit einer Wellenlänge von 1 mm bis 780 nm, Strahlung mit einer Wellenlänge von 380 bis 100 nm und Mikrowellenstrahlung mit einer Frequenz von mehr als 1 MHz gemeinsam eingesetzt wird.

16. Verfahren nach einem der Ansprüche 4 oder 6 oder 9 oder 11 oder 12 oder 14 oder 15, dadurch gekennzeichnet, daß Mikrowellenstrahlung mit einer Frequenz von mehr als 400 MHz eingesetzt wird.

17. Verfahren nach einem der Ansprüche 1 bis 16, dadurch gekennzeichnet, daß der zu reinigende Stoff kontinuierlich in die Desorptionskammer eingebracht wird.

18. Verfahren nach einem der Ansprüche 1 bis 16, dadurch gekennzeichnet, daß der zu reinigende Stoff chargenweise in die Desorptionskammer gebracht wird.

19. Verfahren nach Anspruch 1, dadurch gekennzeichnet, daß der zu reinigende Stoff in der Desorptionskammer von dem Spülgas mit hoher Strömungsgeschwindigkeit durchströmt und/oder umströmt wird.

20. Verfahren nach Anspruch 1, dadurch gekennzeichnet, daß durch das Sicherheitsventil mit einem nachgeschalteten Filter der Überdruck bzw. der Unterdruck des als Spülgas dienenden Gases eingestellt und geregelt wird.

21. Verfahren nach Anspruch 1, dadurch gekennzeichnet, daß das Gas in dem dem Kondensator nachgeschalteten Wärmetauscher durch die Abwärme der Kältemaschine des Kondensators erwärmt wird.

22. Verfahren nach Anspruch 1, dadurch gekennzeichnet, daß das in der Desorptionskammer gesättigte Gas durch einen Ejektor abgesaugt wird, der mit einem Teilstrom ungesättigten Gases beaufschlagt wird.

23. Verfahren nach Anspruch 1, dadurch gekennzeichnet, daß der Desorptionskammer das Spülgas konditioniert aus einer Spülgasversorgungseinrichtung zugeführt und das in der Desorptionskammer gesättigte Gas nach Kondensation der dampfförmigen Verunreinigungen in zwei Teilströme aufgeteilt wird, von denen der eine Teilstrom über einen Filter in die Atmosphäre abgeleitet und der andere Teilstrom dem Ejektor zugeführt wird.

24. Verfahren nach Anspruch 23, dadurch gekennzeichnet; daß von dem aus dem Kondensator austretenden Gas nur der dem Ejektor zugeführte Teilstrom erwärmt wird.

25. Verfahren nach Anspruch 23 und 24, dadurch gekennzeichnet, daß dem dem Ejektor zugeführten Teilstrom konditioniertes Spülgas beigemischt wird.

26. Anlage zur Durchführung des Verfahrens nach Anspruch 1 bis 25, mit einer zur Aufnahme des zu reinigenden Stoffes dienenden Desorptionskammer, die gegenüber der umgebenden Atmosphäre mit Unterdruck beaufschlagt ist und eine Strahleranordnung zur Emission elektromagnetischer Strahlung aufweist, deren Energie dem zu reinigenden Stoff zugeführt wird mit einer am Stoffeingang (6) und Stoffausgang (7) angeordneten Stoffeintragsschleuse (8) als Dosiereinrichtung bzw. Stoffaustragsschleuse (10) für gereinigten Stoff, dadurch gekennzeichnet, daß der Stoffeintragsschleuse (8) eine Waage (12) vorgeschaltet und der Stoffaustragsschleuse (10) eine weitere Waage (13) nachgeschaltet ist und wobei die Desorptionskammer (3) einen Spülgaseinlaß (14) und einen Spülgasauslaß (15) aufweist, der mit einem Kondensator (16) zur Kühlung von mit Verunreinigungen gesättigtem Gas verbunden ist, an dessen Gasausgang (17) ein Wärmetauscher (18) angeschlossen ist, dessen Gasausgang (19) über ein Sicherheitsventil (20) mit einem in die Atmosphäre mündenden Gasauslaß (21) und über eine Anschlußleitung (32) mit einem Ejektor (33) verbunden ist, an den der Spülgasauslaß (15) der Desorptionskammer (3) angeschlossen ist, deren Spülgaseinlaß (14) mit einem Gasvorratsbehälter (23) für Spülgas verbunden ist, der mittels einer Anschlußleitung (34) mit Stellventil (35) mit der Anschlußleitung (36) für den Ejektor (33) verbunden ist, in der eine Gasanalysesonde (25) angeordnet ist, die mit einem Gasanalyserechner (24) verbunden ist, der mit Stellventilen (26, 35, 42) in der Anschlußleitung (44) für Spülgas, der Anschlußleitung (34) für Spülgasbeimischung und einer Gasauslaßleitung (37) verbunden ist.

27. Anlage nach Anspruch 26, dadurch gekennzeichnet, daß der Gasausgang (19) des Wärmetauschers (18) über eine Anschlußleitung (22) mit dem Spülgaseinlaß (14) der Desorptionskammer (3) verbunden ist, an die ein Gasvorratsbehälter (23) für Spülgas angeschlossen ist und in der eine mit einem Gasanalyserechner (24) verbundene Gasanalysesonde (25) angeordnet ist.

28. Anlage nach Anspruch 27, dadurch gekennzeichnet, daß der Gasanalyserechner (25) mit einem dem Vorratsbehälter (23) zugeordneten Stellventil (26) verbunden ist.

29. Anlage nach Anspruch 28, dadurch gekennzeichnet, daß die Waagen (12, 13) mit einem Prozeßrechner (27) verbunden sind, der mit der Stoffeintragsschleuse (8) und der Stoffaustragsschleuse (10) verbunden ist.

30. Anlage nach Anspruch 26, dadurch gekennzeichnet, daß der Wärmetauscher (18) mit dem Abwärmeausgang einer Kältemaschine (28) verbunden ist, deren Kühlkreislauf durch den Kondensator (16) geführt ist.

31. Anlage nach Anspruch 30, dadurch gekennzeichnet, daß der Heizmittelausgang (29) mittels eines weiteren Wärmetauschers (30) zur Kühlung des Heizmittels verbunden ist, dessen Heizmittelausgang (31) an die Kältemaschine (28) angeschlossen ist.

32. Anlage nach Anspruch 26, dadurch gekennzeichnet, daß in der mit dem Gaseingang des Ejektors (33) verbundenen Anschlußleitung (36) und der Anschlußleitung (22) der Desorptionskammer (3) ein Gebläse (38) angeordnet ist.

## Claims

1. Method of removing evaporable substances from a contaminated solid or broken material, whereby the material to be processed is fed in measured amounts into a low-pressure desorption chamber, wherein a scrubber gas is fed around and/or through it and it is irradiated with electro-magnetic waves in order to produce the energy for evaporation, and the evaporable substances released by evaporation from the material to be processed are entrained with the flow of gas and fed therewith out of the desorption chamber, characterised in that before being fed into the desorption chamber, the unprocessed material containing the contaminants is weighed and then irradiated with electro-magnetic waves at a frequency in the range of 1Hz to 4 x 10¹² GHz depending on the material to be reconditioned and a of wave length dependent thereon or with a combination of different forms of energy within the given range, whereby the input of the radiation energy into the desorption chamber is manually or automatically optimised using an actual/target comparison in a computer processor taking into account the specific weight of the cleaned material and the difference in weight between the uncleaned and cleaned material, in that the saturated gas flow is fed through a condenser, in which the contaminants are separated as a condensate and then discharged from the condenser and fed out of the desorption chamber as cleaned substance through an outlet hose, and that the gas leaving the condenser is heated in a heat exchanger and fed back to the desorption chamber, whereby the composition of the gas fed back to the desorption chamber is analyzed and mixed with additional gas as required and a quantity of the gas leaving the heat exchanger corresponding to the quantity of gas added is fed away through a safety valve.

2. Method as claimed in claim 1, characterised in that the electro-magnetic radiation applied is short-wave infra-red radiation having a wave length of 1 mm to 1 nm.

3. Method as claimed in claim 1, characterised in that the electro-magnetic radiation applied is micro-wave radiation having a frequency of more than 1 MHz.

4. Method as claimed in claim 1, characterised in that the electro-magnetic radiation applied is UV-radiation with a wave length of 380 to 100 nm.

5. Method as claimed in claim 1, characterised in that the electro-magnetic radiation applied is low-frequency radiation with a frequency of between 16 and 20 kHz.

6. Method as claimed in claim 1 and 3, characterised in that the electro-magnetic radiation applied is micro-wave radiation having a frequency greater than 1 MHz and short-wave infra-red radiation with a wave length of between 1 mm and 780 nm together.

7. Method as claimed in claim 1,, characterised in that the electro-magnetic radiation applied is UV-radiation having a wave length of between 380 and 100 nm and micro-wave radiation having a frequency greater than 1 MHz.

8. Method as claimed in claim 1, characterised in that the electro-magnetic radiation applied is UV-radiation having a wave length of between 380 and 100 nm and short-wave infra-red radiation having a wave length of between 1 mm and 780 nm together.

9. Method as claimed in claim 1, characterised in that the electro-magnetic radiation applied is low-frequency radiation having a frequency of 16 - 20 kHz and short-wave infra-red radiation having a wave length of 1 mm - 780 nm together.

10. Method as claimed in claim 1, characterised in that the electro-magnetic radiation applied is low-frequency radiation having a frequency of 16 - 20 kHz and UV-radiation having a wave length of 380 - 100 nm together.

11. Method as claimed in claim 1, characterised in that the electro-magnetic radiation applied is low-frequency radiation having a frequency of 16 - 20 kHz and micro-wave radiation having a frequency greater than 1 MHz together.

12. Method as claimed in claim 1, characterised in that the electro-magnetic radiation applied is low-frequency radiation having a frequency of 16 - 20 kHz, infra-red radiation having a wave length of 1 mm - 780 nm and micro-wave radiation having a frequency greater than 1 MHz together.

13. Method as claimed in claim 1, characterised in that the electro-magnetic radiation applied is low-frequency radiation having a frequency of 16 - 20 kHz, infra-red radiation having a wave length of 1 mm to 780 nm and UV-radiation having a wave length of 380 - 100 nm together.

14. Method as claimed in claim 1, characterised in that the electro-magnetic radiation applied is infra-red radiation having a wave length of 1 mm to 780 nm, UV-radiation with a wave length of 380 - 100 nm and micro-wave radiation having a frequency greater than 1 MHz together.

15. Method as claimed in claim 1, characterised in that the electro-magnetic radiation applied is low-frequency radiation having a frequency of 16 - 20 kHz, infra-red radiation with a wave length of 1 mm to 780 nm, radiation with a wave length of 380 to 100 nm and micro-wave radiation having a frequency greater than 1 MHz together.

16. Method as claimed in one of claims 4 or 6 or 9 or 11 or 12 or 14 or 15, characterised in that micro-wave radiation having a frequency greater than 400 MHz is applied.

17. Method as claimed in one of claims 1 to 16, characterised in that the material to be cleaned is fed continuously into the desorption chamber.

18. Method as claimed in one of claims 1 to 16, characterised in that the material to be cleaned is fed into the desorption chamber in charges.

19. Method as claimed in claim 1, characterised in that scrubber gas flows through and/or around the material to be cleaned in the desorption chamber at a high flow speed.

20. Method as claimed in claim 1, characterised in that the pressure level of the gas being used as scrubber gas is adjusted and regulated up or down through the safety valve having a filter fitted downstream.

21. Method as claimed in claim 1, characterised in that the gas in the heat exchanger connected downstream of the condenser is heated by the waste-heat of the cooling equipment of the condenser.

22. Method as claimed in claim 1, characterised in that the saturated gas in the desorption chamber is sucked through an ejector, to which a part-flow of unsaturated gas is applied.

23. Method as claimed in claim 1, characterised in that the scrubber gas is fed conditioned from a scrubber gas supply device to the desorption chamber and, after condensation of the vaporised contaminants, the saturated gas in the desorption chamber is split into two part-flows, one of these part-flows being discharged through a filter into the atmosphere and the other part-flow being fed to the ejector.

24. Method as claimed in claim 23, characterised in that, of the gas leaving the condenser, only the part-flow fed to the ejector is heated.

25. Method as claimed in claim 23 and 24, characterised in that conditioned scrubber gas is mixed with the part-flow fed to the ejector.

26. Equipment for implementing the method as claimed in claim 1 to 25, having a desorption chamber that is used to contain the material to be cleaned, in which pressure below atmospheric pressure is applied, and having a radiating device for emitting electromagnetic radiation, the energy from which is fed to the material to be cleaned by means of a material inlet hose (8) arranged at the material input (6) and material output (7) in the form of a measuring device or material outlet hose (10) for the cleaned substance, characterised in that a weighing device (12) is installed before the substance inlet hose (8) and a further weighing device (13) is installed after the substance outlet hose (10) and whereby the desorption chamber (3) has an inlet (14) for the scrubber gas and an outlet (15) for the scrubber gas, which is connected to a condenser (16) for cooling gas saturated with contaminants, the gas outlet (17) of which is connected to a heat exchanger (18), the gas outlet (19) of which is connected via a safety valve (20) to a gas outlet (21) discharging into the atmosphere and a connecting pipe (32) to an ejector (33), to which the outlet (15) for the scrubber gas from the desorption chamber (3) is connected, of which inlet (14) for the scrubber gas is connected to a gas supply container (23) for the scrubber gas, which is connected via a connecting pipe (34) having a regulator valve (35) to connecting pipe (36) to the ejector (33), in which a gas analysis probe (25) is arranged, which is connected to a gas analysis processor (24), which is connected via regulator valves (26, 35, 42) to connecting pipe (44) for the scrubber gas, connecting pipe (34) for the scrubber gas mixer and a gas outlet pipe (37).

27. Equipment as claimed in claim 26, characterised in that the gas outlet (19) of the heat exchanger (18) is connected via a connecting pipe (22) to the scrubber gas inlet (14) of the desorption chamber (3), to which a gas supply container (23) for scrubber gas is connected and in which a gas analysis probe (25) connected to a gas analysis processor (24) is connected.

28. Equipment as claimed in claim 27, characterised in that the gas analysis processor (25) is connected to a regulator valve (26) arranged on the supply container (23).

29. Equipment as claimed in claim 28, characterised in that the weighing devices (12, 13) are connected to a computer processor, which is connected to the material inlet hose (8) and the material outlet hose (10).

30. Equipment as claimed in claim 26, characterised in that the heat exchanger (18) is connected to the waste heat outlet of a cooling machine (28), whose cooling circuit feeds through the condenser (16).

31. Equipment as claimed in claim 30, characterised in that the output (29) of the heating means is connected via an additional heat exchanger (30) for cooling the heating means, whose heating means outlet (31) is connected to the cooling machine (28).

32. Equipment as claimed in claim 26, characterised in that a blower (38) is arranged in the connecting pipe (36) connected to the gas inlet of the ejector (33) and the connecting pipe (22) of the desorption chamber.

## Revendications

1. Méthode pour éliminer d'une matière contaminée solide ou pouvant être en vrac des matières pouvant s'évaporer, pour laquelle la matière à traiter est dosée et logée dans une chambre de désorption présentant une dépression, baignée et/ou traversée dans celle-ci par un gaz de lavage et irradiée avec des ondes électromagnétiques pour apporter de l'énergie d'évaporation, et les matières pouvant s'évaporer, éliminées par évaporation de la matière à traiter, sont captées dans le flux de gaz et évacuées avec celui-ci de la chambre de désorption, caractérisée en ce que la matière contaminée est pesée avant d'être chargée dans la chambre de désorption puis est irradiée avec des ondes électromagnétiques à une fréquence et avec une longueur d'onde dépendant de la matière à reconditionner, dans la zone de 1 Hz à 4 x 10¹² GHz ou par une combinaison de diverses formes d'énergie de la zone indiquée, l'apport d'énergie d'irradiation dans la chambre de désorption étant optimisé manuellement ou automatiquement à partir d'une comparaison des chiffres prévus avec les chiffres réels dans un ordinateur industriel, en tenant compte du poids spécifique de la matière épurée et de la différence de poids entre la matière non purifiée et la matière épurée, en ce que le flux de gaz saturé est guidé par un condensateur dans lequel les impuretés sont séparées en tant que condensat puis dérivées du condensateur et évacuées de la chambre de désorption, en tant que matière épurée, par l'intermédiaire d'un sas de sortie et en ce que le gaz sortant du condensateur est chauffé dans un échangeur thermique et ramené à la chambre de désorption, la composition du gaz à ramener dans la chambre de désorption étant analysée, du gaz supplémentaire étant ajouté, le cas échéant, et une quantité de gaz sortant de l'échangeur thermique et correspondant à la quantité de gaz ajouté étant dérivée par l'intermédiaire d'une soupape de trop-plein.

2. Méthode selon la revendication 1, caractérisée en ce qu'une radiation infrarouge à onde courte est émise, en tant que radiation électromagnétique, avec une longueur d'onde de 1 mm à 1 nm.

3. Méthode selon la revendication 1, caractérisée en ce qu'une radiation hyperfréquence est émise, en tant que radiation électromagnétique, avec une fréquence supérieure à 1 MHz.

4. Méthode selon la revendication 1, caractérisée en ce qu'une radiation U.V. est émise, en tant que radiation électromagnétique, avec une longueur d'onde de 380 à 100 nm.

5. Méthode selon la revendication 1, caractérisée en ce qu'une radiation basse fréquence est émise, en tant que radiation électromagnétique, à une fréquence de 16 à 20 kHz.

6. Méthode selon les revendications 1 et 3, caractérisée en ce qu'une radiation hyperfréquence est émise, en tant que radiation électromagnétique, à une fréquence supérieure à 1 MHz, en commun avec une radiation infrarouge à onde courte avec une longueur d'onde de 1 mm à 780 nm.

7. Méthode selon la revendication 1, caractérisée en ce qu'une radiation U.V. est émise, en tant que radiation électromagnétique, avec une longueur d'onde de 380 à 100 nm, ainsi qu'une radiation hyperfréquence à une fréquence supérieure à 1 MHz.

8. Méthode selon la revendication 1, caractérisée en ce qu'une radiation U.V. est émise, en tant que radiation électromagnétique, avec une longueur d'onde de 380 à 100 nm, en commun avec une radiation infrarouge à onde courte avec une longueur d'onde de 1 mm à 780 nm.

9. Méthode selon la revendication 1, caractérisée en ce qu'une radiation basse fréquence est émise, en tant que radiation électromagnétique, à une fréquence de 16 à 20 kHz, en commun avec une radiation infrarouge à onde courte avec une longueur d'onde de 1 mm à 780 nm.

10. Méthode selon la revendication 1, caractérisée en ce qu'une radiation basse fréquence est émise, en tant que radiation électromagnétique, à une fréquence de 16 à 20 kHz, en commun avec une longueur d'onde de 380 à 100 nm.

11. Méthode selon la revendication 1, caractérisée en ce qu'une radiation basse fréquence est émise, en tant que radiation électromagnétique, à une fréquence de 16 à 20 kHz, en commun avec une radiation hyperfréquence à une fréquence supérieure à 1 MHz.

12. Méthode selon la revendication 1, caractérisée en ce qu'une radiation basse fréquence est émise, en tant que radiation électromagnétique, à une fréquence de 16 à 20 kHz, en commun avec une radiation infrarouge avec une longueur d'onde de 1 mm à 780 nm et une radiation hyperfréquence à une fréquence supérieure à 1 MHz.

13. Méthode selon la revendication 1, caractérisée en ce qu'une radiation basse fréquence est émise, en tant que radiation électromagnétique, à une fréquence de 16 à 20 kHz, en commun avec une radiation infrarouge avec une longueur d'onde de 1 mm à 780 nm et une radiation U.V. avec une longueur d'onde de 380 à 100 nm.

14. Méthode selon la revendication 1, caractérisée en ce qu'une radiation infrarouge est émise, en tant que radiation élecromagnétique, avec une longueur d'onde de 1 mm à 780 nm, en commun avec une radiation U.V. avec une longueur d'onde de 380 à 100 nm et une radiation hyperfréquence à une fréquence supérieure à 1 MHz.

15. Méthode selon la revendication 1, caractérisée en ce qu'une radiation basse fréquence est émise, en tant que radiation électromagnétique, à une fréquence de 16 à 20 kHZ, en commun avec une radiation infrarouge avec une longueur d'onde de 1 mm à 780 nm, une radiation avec une longueur d'onde e 380 à 100 nm et une radiation hyperfréquence à une fréquence supérieure à 1 MHz.

16. Méthoe selon l'une des revendications 4 ou 6 ou 9 ou 11 ou 12 ou 14 ou 15, caractérisée en ce qu'une radiation hyperfréquence est émise à une fréquence supérieure à 400 MHz.

17. Méthode selon l'une des revendications 1 à 16, caractérisée en ce que la matière à épurer est constamment introduite dans la chambre de désorption.

18. Méthode selon l'une des revendications 1 à 16, caractérisée en ce que la matière à épurer est introduite en charges dans la chambre de désorption.

19. Méthode selon la revendication 1, caractérisée en ce que la matière à épurer est traversée et/ou baignée à grande vitesse par le gaz de lavage, dans la chambre de désorption.

20. Méthode selon la revendication 1, caractérisée en ce que la soupape de sécurité munie d'un filtre placé en aval permet d'ajuster et de régler la surpression ou la dépression du gaz servant de gaz de lavage.

21. Méthode selon la revendication 1, caractérisée en ce que le gaz est chauffé dans l'échangeur thermique placé en aval du condensateur, par la chaleur perdue de la machine frigorifique.

22. Méthode selon la revendication 1, caractérisée en ce que le gaz saturé dans la chambre de désorption est aspiré par un éjecteur qui est alimenté avec un flux partiel de gaz insaturé.

23. Méthode selon la revendication 1, caractérisée en ce que le gaz de lavage est amené à la chambre de désorption, après conditionnement, à partir d'un dispositif d'alimentation en gaz de lavage et en ce que le gaz saturé dans la chambre de désorption est réparti, après condensation des impuretés à l'état de vapeur, en deux flux partiels dont l'un est dérivé dans l'atmosphère et l'autre est amené à l'éjecteur.

24. Méthode selon la revendication 23, caractérisée en ce que seul le flux partiel de gaz sortant du condensateur, flux partiel amené à l'éjecteur, est chauffé.

25. Méthode selon les revendications 23 et 24, caractérisée en ce que du gaz de lavage conditionné est ajouté au flux partiel amené à l'éjecteur.

26. Installation pour la mise en oeuvre de la méthode conforme aux revendications 1 à 25, avec une chambre de désorption qui sert à recevoir la matière à épurer, qui est alimentée avec une dépression par rapport à l'atmosphère ambiante et présente une disposition de radiateur pour l'émission d'une radiation électromagnétique dont l'énergie est amenée à la matière à épurer, avec un sas d'admission de la matière (8) disposé à l'entrée de la matière (6) et à la sortie de la matière (7), en tant que dispositif de dosage, et un sas d'évacuation de la matière épurée (10), caractérisée en ce qu'une balance (12) est placée en amont du sas d'admission de la matière (8) et en ce qu'une balance supplémentaire (13) est placée en aval du sas d'évacuation de la matière (10), la chambre de désorption (3) présentant une entrée de gaz de lavage (14) et une sortie de gaz de lavage (15) qui communique avec un condensateur (16) pour le refroidissement de gaz saturé par des impuretés, condensateur à la sortie de gaz (17) duquel est raccordé un échangeur thermique (18) dont la sortie de gaz (19) communique, par l'intermédiaire d'une soupape de sûreté (20) avec une sortie de gaz (21) débouchant dans l'atmosphère et, par l'intermédiaire d'une conduite de raccordement (32), avec un éjecteur (33) auquel est raccordée la sortie de gaz de lavage (15) de la chambre de désorption (3) dont l'entrée de gaz de lavage (14) communique avec un réservoir de stockage de gaz (23) pour gaz de lavage qui est relié, au moyen d'une conduite de raccordement (34), avec une vanne de régulation (35) à la conduite de raccordement (36) pour l'éjecteur (33), conduite de raccordement dans laquelle est disposée une sonde d'analyse du gaz (25) qui communique avec un ordinateur d'analyse du gaz (24) qui est connecté à des vannes de régulation (26, 35, 42) dans la conduite de raccordement (44) pour le gaz de lavage, la conduite de raccordement (34) pour l'addition de gaz de lavage et une conduite d'évacuation du gaz (37).

27. Installation selon la revendication 26, caractérisée en ce que la sortie de gaz (19) de l'échangeur thermique (18) communique, par l'intermédiaire d'une conduite de raccordement (22), avec l'entrée de gaz de lavage (14) de la chambre de désorption (3) à laquelle est raccordé un réservoir de stockage de gaz (23) pour le gaz de lavage et dans laquelle est disposée une sonde d'analyse de gaz (25) connectée à un ordinateur d'analyse du gaz (24).

28. Installation selon la revendication 27, caractérisée en ce que l'ordinateur d'analyse du gaz (25) est connecté à une vanne de régulation (26) affectée au réservoir de stockage (23).

29. Installation selon la revendication 28, caractérisée en ce que les balances (12, 13) communiquent avec un ordinateur industriel (27) qui est connecté au sas d'admission de la matière (8) et au sas d'évacuation de la matière (10).

30. Installation selon la revendication 26, caractérisée en ce que l'échangeur thermique (18) communique avec la sortie de chaleur perdue d'une machine frigorifique (28) dont le circuit de refroidissement est guidé par le condensateur (16).

31. Installation selon la revendication 30, caractérisée en ce que la sortie du combustible (29) communique au moyen d'un échangeur thermique supplémentaire (30) avec le refroidissement du combustible dont la sortie (31) est raccorée à la machine frigorifique (28).

32. Installation selon la revendication 26, caractérisée en ce qu'un ventilateur (38) est disposé dans la conduite de raccordement (36) communiquant avec l'entrée de gaz de l'éjecteur (33) et dans la conduite de raccordement (22) de la chambre de désorption (3).
